# EUROPÄISCHE PATENTSCHRIFT

(11) **EP 3 107 354 B1**
(45) Veröffentlichungstag und Bekanntmachung des Hinweises auf die Patenterteilung: **09.11.2022**
(21) Anmeldenummer: 15172793.0
(22) Anmeldetag: 18.06.2015
(51) Int. Cl.: H05B 47/13

(54) **BELEUCHTUNGSEINHEIT UND STEUERUNGSVERFAHREN**
LIGHTING UNIT AND CONTROL METHOD
UNITE D'ECLAIRAGE ET PROCEDE DE COMMANDE

(43) Veröffentlichungstag der Anmeldung: 21.12.2016
(73) Patentinhaber: Swisslux AG, 8618 Oetwil am See (CH)
(72) Erfinder: GLAUSER, Patrick, 8625 Gossau (CH)
(74) Vertreter: Patentbüro Paul Rosenich AG

(56) Entgegenhaltungen:
- EP-A1- 2 101 549
- EP-A2- 2 375 867
- US-A1- 2008 197 788
- US-A1- 2012 265 350

## Beschreibung

Die vorliegende Erfindung betrifft eine Beleuchtungseinheit mit einer Mehrzahl von Leuchtmodulen. Jedes Leuchtmodul umfasst zumindest eine Lichtquelle und eine Steuereinheit. Die vorliegende Erfindung betrifft zudem ein Verfahren zum Steuern einer solchen Beleuchtungseinheit.

Beleuchtungseinheiten bzw. Leuchtensysteme sind aus dem Stand der Technik an sich gut bekannt. Typischerweise umfassen solche Systeme eine Mehrzahl von Leuchten, die mit einer zentralen oder mehreren separaten Steuerungseinheiten verbunden sind. Von solchen Steuerungseinheiten aus erfolgt die Steuerung jeder einzelnen Leuchte und die Abstimmung der Leuchten untereinander. Solche Leuchtensysteme, auch Lichtmanagementsysteme genannt, werden z.B. zur Beleuchtung grosser Lagerhallen, zur individuellen Beleuchtung von Konferenz- oder Besprechungsräumen oder auch von Treppenhäusern eingesetzt, und beispielsweise auch von dem aktuellen Anmelder auf dem Markt angeboten.

In der Regel sind die erforderlichen Steuerungsprogramme der einzelnen Steuerungseinheiten sehr komplex, da Befehlsketten bzw. Parametrierungen für jede Leuchtenposition und jede Beleuchtungsoption entsprechend der Organisation der Steuerungseinheiten vorprogrammiert sein müssen. Die Programmierung ist somit sehr aufwändig, da sowohl der Kontext und die Kommunikation jeder einzelnen Leuchte mit der jeweiligen Steuerung als auch der Kontext zwischen den einzelnen Leuchten des Leuchtenverbunds für die Programmierung erfasst werden muss. Solche Steuerungsprogramme sind zudem häufig wenig intuitiv bedienbar, da auch die bereitgestellten Bedienoberflächen entsprechend komplex sind.

Probleme bei der Verwendung solcher komplexer Lichtmanagementsysteme entstehen vor allem dann, wenn z.B. zusätzliche Komponenten wie Leuchten oder Sensoren nachträglich an eine bereits bestehende Beleuchtungseinheit angeschlossen werden, um diese zu erweitern. Dazu kann es notwendig sein, die (zentrale) Steuerungseinheit bzw. das entsprechende Steuerungsprogramm nachträglich aufzurüsten oder sogar neu zu programmieren, um die verschiedenen Verhaltensweisen entsprechend der individuellen Position der einzelnen Leuchten im Raum z.B. zentral zu erfassen und zu definieren. Dies ist in der Regel ebenfalls sehr zeitaufwendig und damit kostspielig.

Aus dem Dokument US 2008/0197788 (erteilt veröffentlicht als US 9,084,314 B2) ist ein programmierbares Unterwasser-Beleuchtungssystem bekannt. Zudem ist aus dem Dokument EP 2 375 867 A2 eine Vorrichtung zur Kontrolle der Stromversorgung von LED-Lichtsystemen bekannt.

Die Aufgabe der vorliegenden Erfindung besteht darin, ein Leuchtensystem bereitzustellen, welches einfach und intuitiv bedienbar ist, ohne dabei an Funktionalität einzubüssen.

Diese Aufgabe wird gelöst, indem eine Beleuchtungseinheit gemäss dem Wortlaut des unabhängigen Anspruchs 1 sowie ein Verfahren zum Steuern einer solchen Beleuchtungseinheit gemäss dem unabhängigen Anspruch 14 bereitgestellt wird. Zusätzliche erfindungsgemässe Merkmale ergeben sich aus den abhängigen Ansprüchen.

Durch das erfindungsgemässe Integrieren der kompletten Lichtsteuerung in jede einzelne Leuchte, im folgenden Leuchtmodul genannt, muss die Organisations- und Befehlsstruktur beim Erstellen eines Steuerprogramms nicht mehr in einer externe Steuerung erfasst werden. Stattdessen wird durch die Integration einer eigenen, umfassenden Steuerung in jede Leuchte ein intelligentes Leuchtmodul bereitgestellt, welches einfach und mit beliebig vielen anderen solcher intelligenten Leuchtmodule zu einer Beleuchtungseinheit kombiniert und auch erweitert werden kann. Dabei ergeben sich folgende Vorteile:
- Bereits die Planung der Schaltungsart ist erleichtert:
   Der Planer muss im Vorfeld die separate Organisation von Leuchten und Steuerung nicht mehr einkalkulieren, sondern lediglich die Verbindung zwischen allen Leuchtmodulen.
- Die Montage ist einfach und zeitsparend:
   Ist die gesamte Lichtsteuerung in das Lampengehäuse integriert, wie es in einer bevorzugten Ausführungsform der Fall ist, braucht zur Montage lediglich zunächst eine Grundplatte montiert und eine Leuchtenklemme angeschlossen werden, anschliessend wird das Lampengehäuse inklusive der Elektronik z.B. per Stecker verbunden und werkzeuglos aufgeschnappt.
- Die Inbetriebnahme ist vereinfacht:
   Für jede Betriebsart kann der erforderliche Steuerungs-/Regelsatz aus fertig vorgespeicherten Steuerungseinstellungen ausgewählt werden.
- Der Betriebs ist vereinfacht:
   Müssen Anpassungen z.B. bezüglich der Betriebsart oder der Position vorgenommen werden, kann einfach auf die in jedem Leuchtmodul bereits gespeicherten Voreinstellungen zurückgegriffen werden.

Kommunizieren Leuchtmodule erfindungsgemäss direkt miteinander, werden in jedem Leuchtmodul etwaige Reaktionen lediglich bereits vorhandene Funktionen aus der eigenen Steuereinheit bzw. ihrem Speicher abgerufen. So kann z.B. durch die Eingabe eines Steuerbefehls an ein Leuchtmodul die entsprechende Information an alle anderen Leuchtmodule der Beleuchtungseinheit übertragen werden, ebenso können Informationen über detektierte Bewegungen oder Helligkeiten ausgetauscht werden. Auf diese Weise wird ohne eine separate Steuerungseinheit jedes erfindungsgemässe Leuchtmodul durch die eigene Steuerung oder durch die Steuerung eines beliebigen anderen Leuchtmoduls gesteuert.

Beispielhafte Ausführungsformen der vorliegenden Erfindung werden nachstehend anhand von Figuren näher erläutert. Dabei zeigen die Figuren besonders bevorzugte Ausführungsbeispiele der Erfindung, ohne ihren Umfang einzuschränken, da je nach Bedarf einzelne Elemente wahlweise eingesetzt und/oder miteinander kombiniert werden können. Es zeigen
- Fig. 1: eine Übersichtsdarstellung über eine Beleuchtungseinheit mit exemplarisch drei Leuchtmodulen, wobei ein Leuchtmodul in seine wesentlichen Einzelelemente auseinander gebaut gezeigt ist; und
- Fig. 2: eine schematische Darstellung eines Beleuchtungssystems mit einer Mehrzahl regelmässig angeordneter Leuchtmodule, welche über Kommunikationsmittel miteinander verbunden und über eine Adressierung in Gruppen organisiert sind.

### Beschreibung der Erfindung

Die vorliegende Erfindung betrifft ein Beleuchtungssystem 1 welches zur Innen- und/oder Aussenbeleuchtung eingesetzt werden kann. Insbesondere ist das Beleuchtungssystem für Standorte geeignet, welche zur optimalen Beleuchtung zwei oder mehr Lichtquellen benötigen. Beispielhafte Anwendungsbereiche sind Innenräume wie Treppenhäuser, Korridore, Foyers, Aufenthaltsräume, Ausstellungsräume, Büroräume (insbesondere Grossraumbüros), Schulzimmer, Gastronomieräume oder auch Lagerräume. Bespielhafte Anwendungsbereiche zur Aussenbeleuchtung sind Strassen oder Lagerareale. In diesem Fall sind die Komponenten des Beleuchtungssytems 1 bevorzugt witterungsbeständig ausgebildet.

Eine Beleuchtungseinheit 1 gemäss der vorliegenden Erfindung umfasst eine Mehrzahl von Leuchtmodulen 2. Jedes Leuchtmodul 2 wird dabei zumindest aus einer Lichtquelle 3 und einer Steuereinheit 5 zur Steuerung der Aktivität der Lichtquelle 3 gebildet. Erfindungsgemäss ist dabei die Steuereinheit 5 in das ihr zugeordnete Leuchtmodul 2 integriert. Unter integriert ist in diesem Fall zu verstehen, dass die Steuereinheit 5 mit ihren Komponenten nicht nur funktionell mit einem Leuchtmodul verbunden ist, sondern dass sei auch strukturell eine Einheit bilden.

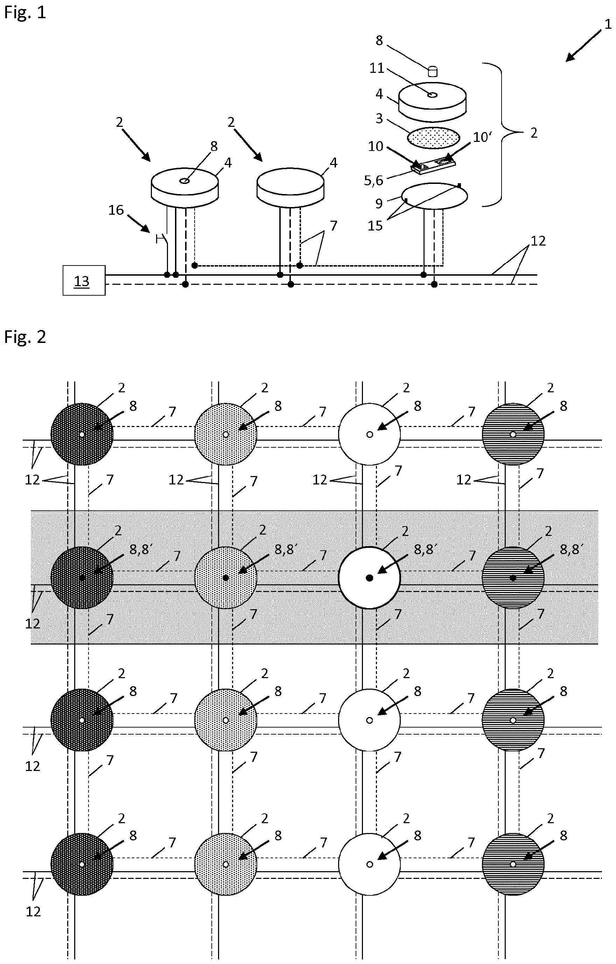

Figur 1 zeigt in einer schematischen Übersichtsdarstellung eine solche erfindungsgemässe Beleuchtungseinheit 1, mit drei beispielhaft gezeigten Leuchtmodulen 2. Zur besseren Erläuterung der erfindungsgemässen Leuchtmodule 2 ist dabei das in Figur 1 ganz rechts dargestellte Leuchtmodul 2 in auseinander gebauter Form dargestellt; die diesem Leuchtmodul 2 zugeordnete Steuereinheit 5 ist gut zu sehen.

Jede Steuereinheit 5 eines Leuchtmoduls 2 umfasst zumindest ein Steuerprogramm und ein Speichermedium 14. Jedes Leuchtmodul 2 umfasst also erfindungsgemäss die komplette Regelung zur Steuerung von Verhaltensweisen seiner Lichtquelle 3. Dazu kann die Steuereinheit 5 zur Ausführung des Steuerprogramms auf auf dem Speichermedium 14 gespeicherte Voreinstellungen zurückgreifen. Gemäss der vorliegenden Erfindung ist auf dem Speichermedium 14 jedes Leuchtmoduls 2 ein Satz von Voreinstellungen zum Betrieb der Beleuchtungseinheit 1 mit der Steuereinheit 5 abrufbar gespeichert. Zum Betrieb werden dann diese Voreinstellungen aus dem Speichermedium 14 in das Steuerprogramm geladen und durch die Steuereinheit 5 ausgeführt.

In einem Beleuchtungssystem 1 gemäss der vorliegenden Erfindung hat jedes Leuchtmodul 2 die Lichtquelle 3 und die komplette Lichtsteuerung integriert. Jede Leuchte 2 ist also mit eigener Steuerungsintelligenz versehen; ein zentrales Steuerungsprogramm ist damit in dem erfindungsgemässen Beleuchtungssystem 1 nicht nötig und entsprechend auch nicht vorhanden. So können in einfacher Art und Weise mehrere von solchen intelligenten Leuchtmodulen 2 zu einer leistungsfähigen Beleuchtungseinheit 1 kombiniert werden.

In einer Ausführungsform umfasst jedes Leuchtmodul 2 einer Beleuchtungseinheit einen identischen Satz Voreinstellungen. Die gespeicherten Voreinstellungen betreffen Parameter und Regelungen für den Betrieb in einem oder mehreren spezifischen Anwendungsbereichen. Für jedes Leuchtmodul 2 können spezifische Parameter ausgewählt und geladen werden. Bei der Installation können dann für verschiedene Leuchtmodule 2 gleiche oder andere Regelungen aus den Voreinstellungen ausgewählt und geladen werden, je nach Anforderungen der individuellen Position eines Leuchtmoduls 2 und/oder der gewählten Betriebsart.

In einer besonders bevorzugten Ausführungsform umfasst der Satz Voreinstellungen zwei oder mehr Unterregister, wobei jedes Unterregister Voreinstellungen für einen spezifischen Anwendungsbereich umfasst. Beispielhafte Anwendungsbereiche sind unter anderem und wie bereits erwähnt Treppenhäuser, Grossraumbüros oder Foyers.

Die in dem Speichermedium 14 abrufbar gespeicherten Voreinstellungen können nicht nur Parameter umfassen, welche spezifische Verhaltensweisen jedes Leuchtmoduls 2 definieren. Sie können zudem Parameter umfassen, welche für jedes Leuchtmodul 2 individuell die Identität und die Position im Raum definieren. In Kombination mit vorprogrammierten Verhaltensweisen ist so jedes Leuchtmodul dazu ausgebildet, durch seine eigene Steuerung individuell auf gegebene Situationen und abgestimmt auf die eigene Position zu reagieren.

Vorteil dieser besonders bevorzugten Ausführungsform ist, dass insbesondere die Inbetriebnahme stark vereinfacht ist, da lediglich das entsprechende Unterregister mit den Voreinstellungen für die beabsichtigte Betriebsart aus dem Speichermedium 14 ausgewählt und in das Steuerprogramm der jeweiligen Leuchtmodule 2 geladen werden muss.

Die Auswahl oder Änderung einzelner Parameter oder Unterregister aus dem Satz Voreinstellungen können vorzugsweise in allen Ausführungsformen mittels eines Bediengeräts 6 an jedem Leuchtmodul 2 individuell vorgenommen werden. Dazu umfasst jedes Leuchtmodul 2 ein eigenes Bediengerät 6, welches später genauer beschrieben wird.

Das in Figur 1 auf der rechten Seite gezeigte Leuchtmodul 2 umfasst als Lichtquelle 3 eine Mehrzahl von LEDs. Die LEDs sind dabei auf einer hier rund dargestellten Halterplatte aufgebracht. Die Auswahl eines geeigneten Leuchtmittels als Lichtquellen 3 zum Betrieb der erfindungsgemässen Beleuchtungseinheit 1 liegt im Wissen des Fachmanns. Beispielsweise seien hier LED Lampen (light emitting electrode), Glühlampen, Halogenlampen, oder auch Energiesparlampen genannt.

In einer bevorzugten Ausführungsform weist die Lichtquelle 3 eines Leuchtmoduls 2 eine oder mehrere LEDs auf. In einer besonders bevorzugten Ausführungsform sind die Lichtquellen 3 aller Leuchtmodule 2 einer Beleuchtungseinheit 2 gleichartig ausgebildet, alternativ können aber auch Leuchtmodule 2 einer Beleuchtungseinheit 1 verschiedene Lichtquellen 3 oder eine Kombination verschiedener Lichtquellen 3 aufweisen.

In einer besonders bevorzugten Ausführungsform umfasst zumindest ein Leuchtmodul 2 der Beleuchtungseinheit 1, vorzugsweise jedes Leuchtmodul 2 einen Lichtsensor 8. Jedes Leuchtmodul 2 mit Lichtsensor 8 beobachtet vorzugsweise ständig das vorhandene Licht. Die Steuereinheit 5 kann die Lichtquelle 3 sofort ausschalten oder in der Intensität zurückdimmen, sobald es genügend hell ist.

Lichtsensoren 8 und ihre Funktionsweisen sind an sich aus dem Stand der Technik gut bekannt; sie werden daher an dieser Stelle nicht näher erläutert. Als ein beispielhaft geeigneter Lichtsensor sei hier eine Fotodiode genannt

In Figur 1 sind zwei der dargestellten Leuchtmodule 2 mit einem Lichtsensor 8 ausgebildet gezeigt. In beiden Fällen ist dabei der Lichtsensor 8 mittig an einem Gehäuse 4 des jeweiligen Leuchtmoduls 2 angebracht, wobei der Erfassungsbereich des Lichtsensors 8 auf den zu beleuchtenden Raum ausgerichtet ist. So kann eine Lichtintensität in dem zu beleuchtenden Raum zuverlässig erfasst werden. Gemäss Figur 1 kann für den Lichtsensor 8 zur Befestigung eine entsprechende Aussparung als Aufnahme 11 in dem Gehäuse 4 vorgesehen sein. Die Positionierung von Sensoren an einem Leuchtmodul 2, wie hier beispielsweise zur optimalen Lichtmessung, liegt im Wissen des Fachmanns und wird daher nicht weiter ausgeführt.

Mittels des Lichtsensors 8 kann jedes Leuchtmodul 2 die Intensität des Umgebungslichts detektieren und in von der Steuereinheit 5 verarbeitbare Signale umwandeln. Je nach gemessener Lichtintensität und entsprechend der vorprogrammierten Verhaltensweisen erfolgt eine durch die eigene Steuereinheit 5 ausgelöste Reaktion des Leuchtmoduls 2.

Solche Reaktionen können beispielsweise die folgenden Funktionen sein:
- Ein- und Ausschalten der Lichtquelle (3),
- Dimmen der Lichtquelle (3),
- Einstellen einer Leuchtintensität der Lichtquelle (3),
- Einstellen eines Lichtschwellenwertes des Lichtsensors (8), und/oder
- Einstellen einer Vor- oder Nachlaufzeit der Lichtquelle (3) bei einer definierten Leuchtintensität.

Die durch die Steuereinheit 5 auszuführenden oder regelbaren Funktionen eines Leuchtmoduls in Reaktion auf eine gemessene Lichtintensität sind an sich aus dem Stand der Technik bekannt. Die oben genannten Beispielreaktionen können daher durch den Fachmann nach Bedarf beliebig ergänzt werden.

Alternativ kann, wenn z.B. ausgewählte Leuchtmodule 2 über eine Adressierung in eine oder mehr Gruppen organisiert sind, zumindest ein Leuchtmodul 2 einer solchen Gruppe einen Lichtsensor 8 umfassen. In dieser Ausführungsform kann dann über Voreinstellungen definiert sein, dass jedes Leuchtmodul 2 einer Gruppe mit gleicher Adressierung synchron reagiert, wenn das Leuchtmodul 2 mit dem Lichtsensor 8 eine bestimmte Lichtintensität detektiert.

In allen Ausführungsformen umfasst die Beleuchtungseinheit 1 gemäss der vorliegenden Erfindung Kommunikationsmittel 7, welche die Leuchtmodule 2 zum Datenaustausch untereinander verbinden. Eine solche Beleuchtungseinheit 1, in welcher die Leuchtmodule 2 kommunikationstechnisch miteinander verbunden sind, ist in beiden Figuren 1 und 2 dargestellt.

Durch die Verbindung der Leuchtmodule 2 untereinander über Kommunikationsleitungen ist es möglich, dass z.B. eine Eingabe und/oder eine Änderung an dem Steuerprogramm eines Leuchtmoduls 2 unmittelbar an die Steuerprogramme der übrigen Leuchtmodule 2 übertragbar ist. Ebenso ist es möglich, dass eine Information z.B. eines Lichtsensors 8 (oder eines anderes Sensors) eines Leuchtmoduls 2 unmittelbar an die Steuerprogramme der übrigen Leuchtmodule 2 übertragbar ist. Da jedes Leuchtmodul 2 sämtliche notwendigen Regelungseinstellungen zur eigenen Steuerung für jede Position und jede Verwendung umfasst, ist jedes Leuchtmodul 2 der Beleuchtungseinheit 1 über das eigene Steuerprogramm oder das Steuerprogramm eines beliebigen anderen Leuchtmoduls der Beleuchtungseinheit 1 steuerbar.

Die Kommunikationsmittel 7 zum Datenaustausch zwischen den Steuerprogrammen der Leuchtmodule 2 können als drahtlose Kommunikationsverbindungen oder als kabelgebundene Kommunikationsverbindungen ausgebildet sein. Alternativ kann, falls es für gegebene Situationen vorteilhafter ist, eine Kombination von drahtlosen und kabelgebundenen Kommunikationsverbindungen verwendet werden.

Drahtlose und kabelgebundene Kommunikationsverbindungen sind an sich aus dem Stand der Technik bekannt, und werden daher nicht weiter erläutert. Als Beispiel für eine drahtlose Kommunikationsverbindung sei hier der Standard IEEE 802.11, oder auch als "Wi-Fi" bekannt, genannt. Ebenfalls bekannt sind drahtlose Kommunikationsverbindungen wie Bluetooth oder Infrarot. Als Beispiel für eine kabelgebundene Kommunikationsverbinddung sei hier der IEEE 802.3-Standard, allgemein als "Ethernet" bezeichnet, genannt. Es obliegt dem Wissen des Fachmanns, auch andere, drahtlose und/oder kabelgebundene Kommunikationsverbindungen für die erfindungsgemässe Beleuchtungseinheit zu verwenden.

Vorzugsweise in allen Ausführungsformen der vorliegenden Erfindung umfasst zumindest ein Leuchtmodul 2 einen Sensor 8', welcher zum Erfassen von bewegten Wärmequellen ausgebildet ist. Je nach zu beleuchtendem Raum kann vorgesehen sein, dass mehr als ein Leuchtmodul 2 einen solchen Sensor 8' zum Erfassen von bewegten Wärmequellen umfasst. Dies kann z.B. dann erwünscht sein, wenn der zu beleuchtende Raum nicht vollständig durch den Erfassungsbereich des Sensors 8' abgedeckt werden kann.

Für die erfindungsgemässe Beleuchtungseinheit 1 besonders bevorzugte Sensoren 8' zum Erfassen von bewegten Wärmequellen, beispielsweise Personen, sind sogenannte aus dem Stand der Technik bekannte Passiv-Infrarotsensoren. Solche Sensoren detektieren Infrarotstrahlungen, welche bewegte Objekte ausstrahlen, und wandeln sie in elektrische Signale um. Gemäss Stand der Technik können sie beispielsweise als Bewegungsmelder oder als Präsenzmelder verwendet werden.

Dabei schaltet typischerweise ein Bewegungsmelder die Helligkeitsmessung aus, sobald er das Einschalten einer Lichtquelle ausgelöst hat. Dagegen erfolgt die Helligkeitsmessung bei einem Präsenzmelder ununterbrochen, so dass der Präsenzmelder auch dann das Ausschalten einer Lichtquelle auslösen kann, wenn trotz Bewegungen genügend Tageslicht vorhanden ist.

Mögliche Reaktionen, welche durch die Steuereinheit 5 aufgrund der Detektion von bewegten Wärmequellen durchgeführt werden können, wurden bereits oben im Kontext des Lichtsensors 8 diskutiert.

Bevorzugt in allen Ausführungsformen umfasst jedes Leuchtmodul 2 einer erfindungsgemässen Beleuchtungseinheit 1 ein Lampengehäuse 4. Dabei umschliesst jedes Lampengehäuse 4 sowohl die Lichtquelle 3 als auch die Steuereinheit 5 des ihr zugeordneten Leuchtmoduls 2. Besonders bevorzugt ist, dass die gesamte Steuerung 5,6,10,14 in das Gehäuse 4 integriert ist, so dass sie einfach zusammen mit dem Lampengehäuse 4 montierbar und/oder demontierbar ist.

Materialien und Formen für Lampengehäuse 4 sind an sich aus dem Stand der Technik hinlänglich bekannt. Als beispielhafte Materialien sei hier Glas oder Kunststoffe genannt. Beispielhafte Formen des Lampengehäuses 4 sind Zylinder mit verschiedenen Grundflächen, wie Kreise, Ellipsen oder Vierecke, oder Kugel-/kugelverwandte Formen. Die Wahl des Materials ebenso wie die Form für das Lampengehäuse 4 ist vor allem bestimmt durch Anforderungen der Verwendung oder ästhetische Vorlieben des Benutzers. Der Einfachheit halber sind die Lampengehäuse der Leuchtmodule der Figuren 1 und 2 jeweils zylindrisch mit kreisförmiger Grundfläche. Es können aber auch für eine Beleuchtungseinheit 1 verschiedene Formen kombiniert werden.

Ebenfalls bevorzugt in allen Ausführungsformen umfasst die Beleuchtungseinheit 1 zumindest eine Grundplatte 9. Eine Grundplatte 9 ist ausgebildet, um daran zumindest ein Leuchtmodul 2 zu befestigen. Die Grundplatte 9 selbst ist wiederum z.B. an einer Wand oder einer Decke befestigbar ausgebildet, oder kann zur Befestigung an einer Wand oder Decke in diese versenkbar sein. Die Grundplatte dient also als Verbindungselement zwischen Leuchtmodul 2 und Decke oder Wand.

Eine solche Grundplatte 9 ist in Figur 1 für das rechte Leuchtmodul 2 zu sehen. Hier ist ein Leuchtmodul 2 auf einer Grundplatte 9 befestigt. Als Befestigungsmittel 15 ist in der Figur 1 beispielhaft ein Stecksystem gezeigt, mit welchem das Lampengehäuse 4 eines Leuchtmoduls 2 inklusive Elektronik (hier inklusive der gesamten Steuerung 5,6,14, der Sensorik 8 und der LED-Leuchten 3) einfach aufgeschnappt oder geklemmt werden kann. Befestigungsmittel 15 sind aus dem Stand der Technik an sich bekannt und werden daher hier nicht weiter aufgeführt.

In einer alternativen, nicht gezeigten Ausführungsform werden mehrere Leuchtmodule 2 an einer gemeinsamen oder an mehreren gemeinsamen Grundplatten 9 befestigt. Die Wahl, ob ein oder mehr Leuchtmodule 2 einer Beleuchtungseinheit 1 an jeweils einer eigenen oder an einer oder mehr gemeinsamen Grundplatten 9 befestigt werden, kann von dem Fachmann ohne weiteres je nach den räumlichen Begebenheiten und Anforderungen der Aus-/oder Beleuchtung getroffen werden.

Wie bereits erwähnt umfasst bevorzugt in allen Ausführungsformen jedes Leuchtmodul 2 ein eigenes Bediengerät 6, mit welchem Einstellungen und/oder Änderungen an der Steuereinheit 5, dem Steuerprogramm und/oder den Voreinstellungen vornehmbar sind. Besonders bevorzugt ist dabei das Bediengerät 6 von dem Lampengehäuse 4 des ihm zugeordneten Leuchtmoduls 2 umschlossen oder sogar in dieses integriert.

Bediengeräte 6 zum Durchführen von Einstellungen an der Steuereinheit und/oder zum Eingeben von Änderungen in einem Steuerprogramm und/oder zum Abrufen von Voreinstellungen aus dem Speichermedium 14 sind an sich aus dem Stand der Technik bekannt. Bevorzugte Bediengeräte 6 für die erfindungsgemässe Beleuchtungseinheit 1 umfassen Eingabemittel 10 zur Eingabe von Einstellungen oder Änderungen. Dies können z.B. Schalter, berührungsempfindliche Eingabeoberflächen wie touch screens oder Fernbedienungssysteme (z.B. Infrarot-Fernbedienungen) sein.

Es kann vorgesehen sein, dass für verschiedene Eingaben an die Steuereinheit 5 separate Eingabemittel 10,10' bereitgestellt werden. Dies ist in Figur 1 gezeigt. So können z.B. Schalter für die Auswahl eines vorprogrammierten Unterregisters bereitgestellt werden, und zusätzlich separate Schalter für die Vergabe einer Adresse zum Gruppieren von Leuchtmodulen 2. Alternativ oder ergänzend kann z.B. für kleinere Anpassungen/Änderungen nach der Montage ein Fernbedienungssystem vorgesehen sein, mit welchem ein Installateur oder ein Benutzer Feineinstellungen wie z.B. Anpassungen eines Helligkeitsschwellenwerts vornehmen kann.

In einer besonders bevorzugten Ausführungsform umfasst jedes Bediengerät 6 separate Eingabemittel 10 zur Auswahl von im Speichermedium 14 gespeicherten Voreinstellungen, zur Vergabe einer Adresse, sowie zur Eingabe von Änderungen nach der Montage.

In einer Ausführungsform umfassen mehrere oder sämtliche Leuchtmodule 2 der erfindungsgemässen Beleuchtungseinheit 1 eine Adressierung. Dies kann beispielsweise mit zwei Drehschaltern erfolgen, wie sie aus dem Stand der Technik für die Vergabe von elektronischen Adressen bekannt sind. Mittels eines Adressiersystems können mehrere Leuchtmodule 2 als Gruppen definiert werden, wobei Leuchtmodule 2 mit gleicher Adresse jeweils eine Gruppe bilden und die gleichen Einstellungen des Steuerprogramms aufweisen, und sich damit identisch verhalten. Leuchtmodule 2 einer Gruppe reagieren synchron oder zumindest gleichartig auf Steuerungsbefehle.

Der Figur 1 ist weiter zu entnehmen, dass zum Betrieb der elektrisch betriebenen Komponenten, wie z.B. die Lichtquelle 3, die Steuereinheit 5 oder das Bediengerät, jedes Leuchtmodul 2 an ein elektrisches Leitungsnetz angebunden ist. Über elektrische Leitungen 12 sind dabei die Leuchtmodule 2 mit einer Stromquelle 13 verbunden. Je nach Bedarf kann die Stromversorgung der Leuchtmodule 2 auch über mehrere Stromquellen 13 erfolgen. Leitungen können konventionelle Installationsdrähte sein, z.B. dreiadrige Kabel mit den Leitern L, N, PE. Schematisch sind in der Figur 2 zwei elektronische Adern gezeigt.

Gezeigt ist in Figur 1 zudem ein Schalter 16, mit welchem das links gezeigte Leuchtmodul 2 ein- und ausgeschaltet werden kann. Es kann vorgesehen sein, dass solche Ein-/Aus-Informationen auch an die Steuereinheiten benachbarter Leuchtmodule 2 weitergegeben werden, sofern diese Leuchtmodule 2 kommunikationstechnisch miteinander verbunden sind und sofern dies in den gewählten Einstellungen der jeweiligen Steuerprogramme vorgesehen ist. Es kann zudem oder alternativ vorgesehen sein, dass mehr als ein Leuchtmodul 2 oder sogar sämtliche Leuchtmodule 2 über solche Schalter ein- und/oder ausgeschaltet werden können.

In Figur 2 ist eine ganz besonders bevorzugte Ausführungsform der erfindungsgemässen Beleuchtungseinheit 1 dargestellt. Die Beleuchtungseinheit 1 ist hier in einer schematischen Aufsicht auf die Lampengehäuse 4 der Leuchtmodule 2 gezeigt, wobei die einzelnen Leuchtmodule 2 vollständig zusammengebaut sind. Der Einfachheit halber sind die Leuchtmodule in einer gleichmässigen Anordnung von 4x4 Modulen gezeigt. Diese Anordnung ist rein willkürlich zu Illustrationszwecken gewählt. In der Praxis ist die Anordnung der einzelnen Leuchtmodule 2 in Abhängigkeit der räumlichen Gegebenheiten gewählt. Je nach Art und Anforderungen der geplanten Verwendung können mehr oder weniger Leuchtmodule 2 angeschlossen und zu einer Beleuchtungseinheit 1 zusammengefasst werden.

Zudem können die Lampengehäuse 4 der Leuchtmodule 2 wie bereits diskutiert in anderen, geeigneten Formen ausgebildet sein. Die Leuchtmodule 2 können zudem in die Decke oder Wand versenkt oder aufgesetzt montiert sein. Weiter kann ein Leuchtmodul 2 z.B. als Hängeleuchte, Pendelleuchte oder Stehleuchte ausgebildet sein. Sofern die Stromversorgung jedes Leuchtmoduls 2 gesichert ist, und eine drahtlose Kommunikationsleitung 7 verwendet wird, welche die Kommunikation unter den Leuchtmodulen 2 gewährleistet, können einzelne oder mehr Leuchtmodule 2 sogar bis zu einem gewissen Grad als mobile Leuchten ausgebildet sein.

In der besonders bevorzugten Ausführungsform gemäss Figur 2 umfasst jedes Leuchtmodul 2 seine eigene, integrierte Steuereinheit 5, und es sind zudem sämtliche Leuchtmodule 2 der Beleuchtungseinheit 1 über Kommunikationsmittel 7 miteinander verbunden. Der Vollständigkeit halber sind die elektrischen Leitungen 12 zur Stromversorgung der Leuchtmodule 2 und ihrer elektrischen Komponenten ebenfalls gezeigt.

Des Weiteren umfasst in dieser gezeigten, besonders bevorzugten Ausführungsform jedes Leuchtmodul 2 einen Lichtsensor 8, mit welchem die Helligkeit im Erfassungsbereich des jeweiligen Leuchtmoduls 2 detektiert werden kann. Zusätzlich zu dem Lichtsensor 8 umfassen diejenigen Leuchtmodule 2, welche sich im Bereich befinden, in dem sich Personen bewegen können (z.B. in einem Gang), je einen Sensor 8' zum Erfassen von bewegten Wärmequellen. Ein solcher Gang bzw. Bewegungsbereich ist in der Figur 2 durch eine graue Hinterlegung für die Leuchtmodule 2 in der zweiten Reihe von oben angedeutet. Für diese Leuchtmodule 2 ist zudem die Sensoraufnahme 11 im Leuchtengehäuse 4 schwarz dargestellt, um die Präsenz von den zwei Sensoren 8,8' zu verdeutlichen. Es liegt im Wissen des Fachmannes, zu bestimmen, welchem Leuchtmodule 2 welche Sensoren 8,8' umfassen sollen, um eine gewünschte Helligkeits- und/oder Bewegungsdetektion durchzuführen.

Über die Kommunikationsmittel 7 können die Leuchtmodule 2 untereinander Informationen bezüglich der Helligkeit und bezüglich detektierter Bewegungen austauschen. Da jedes Leuchtmodul 2 erfindungsgemäss die gesamte Steuerung bereits integriert hat, kann jedes Leuchtmodul im System eigenständig auf Bewegungen reagieren und die Beleuchtung entsprechend der gewählten Anwendung und der detektierten Helligkeit eigenständig anpassen.

In einer besonders bevorzugten Einstellung der Steuereinheit 5 weisen die über Kommunikationsmittel 7 miteinander verbundenen Leuchtmodule 2 eine eigene Schwarm-Intelligenz auf. Gemäss dieser Schwarm-Intelligenz reagiert nicht nur dasjenige Leuchtmodul 2 auf eine von ihm detektierte Leuchtintensität und/oder Bewegung, sondern zudem gemäss vordefinierten Einstellungen auch benachbarte Leuchtmodule 2. So kann z.B. eingestellt werden, dass in einem Treppenhaus die Beleuchtung dem Bewohner ständig vorauseilt und ihn nicht ins Dunkle laufen lässt:
So kann beispielsweise für Leuchtmodule 2, welche in einer "Position -1" unmittelbar neben einem Leuchtmodul 2 angeordnet sind, das eine Bewegung detektiert hat (Position 0), definiert werden, dass sie mit einer Leuchtintensität von 90% aktiv sind, während das Leuchtmodul 2, welches die Bewegung detektiert hat, mit einer Leuchtintensität von 100% leuchtet. Weitergehend kann für Leuchtmodule 2 an der Position -2 definiert sein, dass sie mit einer Leuchtintensität von 70% leuchten. Sobald sich die Person in den Erfassungsbereich des Bewegungssensors 8' des nächsten Leuchtmodul 2 bewegt, wird die Beleuchtungsintensität dann mit diesem Leuchtmodul 2 als Referenzleuchte der Position 0 für die umliegenden/angrenzenden Leuchtmodule 2 angepasst.

Dieses Prinzip der Beleuchtung bei vorprogrammierter Schwarmintelligenz ist in der Figur 2 für die Leuchtmodule 2 im Gangbereich dargestellt. Das in ohne Schraffierung dargestellte Leuchtmodul 2 hat gerade eine Bewegung in dem Erfassungsbereich seines Bewegungssensors 8' detektiert und leuchtet beispielsweise mit 100% Leuchtintensität (Position 0). Sämtliche benachbarten Leuchtmodule 2 sind durch die Kommunikationsmittel 7 über die detektierte Bewegung informiert. Die Steuereinheit 5 jedes Leuchtmoduls 2 steuert daraufhin, dass das nächstliegende Leuchtmodul 2 zur linken Seite (Position -1) mit einer geringeren Intensität (z.B. 90%) leuchtet, ebenso das nächstliegende Leuchtmodul 2 zur rechten Seite (ebenfalls Position -1), während das übernächste Leuchtmodul 2 zur linken Seite mit einer nochmals verringerten Leuchtintensität leuchtet (z.B. 50%, Position -2) .

Das Anpassen mehrerer benachbarter Leuchten auf eine Bewegung, die mit nur einer oder wenigen Leuchtmodulen 2 detektiert wurde, ist aus dem Stand der Technik an sich als Schwarm-Intelligenz bekannt. Im Gegensatz zum Stand der Technik, bei dem die Schwarm-Intelligenz zentral definiert werden muss, haben jedoch die erfindungsgemässen Leuchtmodule 2 jeweils bereits eine eigene, integrierte und vollständig definierte Schwarm-Intelligenz.

In der besonders bevorzugten Ausführungsform der Figur 2 umfassen die Leuchtmodule 2 eine Adressierung, welche sie in hier vier Gruppen unterteilt. Dabei sind jeweils die Leuchtmodule 2 einer Spalte als eine Gruppe definiert; jede Gruppe ist durch eine eigene Schraffierung hervorgehoben. Leuchtmodule 2 mit gleicher Adresse bilden eine Lichtgruppe, in welcher jedes Leuchtmodul 2 gleichartig steuerbar ist.

In Kombination mit der Schwarmintelligenz kann die Verwendung von Adressierungen die Steuerung einer komplexen Beleuchtungseinheit 1 zusätzlich vereinfachen:
Sämtliche Einstellungen oder Informationen der Steuereinheit 5 eines Leuchtmoduls 2 werden gleichzeitig an die Steuereinheiten 5 aller Leuchtmodule 2 mit der gleichen Adresse übertragen. So kann vorgesehen sein, dass nicht nur diejenigen Leuchtmodule 2, die sich z.B. an einer Position 0, -1 oder -2 befinden, mit einer vordefinierten Beleuchtungsstärke leuchten, sondern dass sämtliche weiteren Leuchtmodule 2, die sich in der gleichen Gruppe befinden, in der gleichen, vordefinierten Beleuchtungsstärke leuchten. Dies ist in der Figur 2 für die Leuchtmodule 2 einer Spalte, also einer Gruppe gezeigt:
Die Leuchtmodule 2, die sich in der gleichen Spalte befinden wie z.B. das Leuchtmodul 2 der Position 0, leuchten alle mit der gleichen Intensität. Analog dazu leuchten die Leuchtmodule 2, die sich in der gleichen Gruppe befinden wie das Leuchtmodul 2 an der Position -1 in dem schraffierten Gangbereich, mit der gleichen Intensität, etc.

**Bezugszeichen:**

| | |
|---|---|
| Beleuchtungseinheit | 1 |
| Leuchtmodul | 2 |
| Lichtquelle | 3 |
| Lampengehäuse | 4 |
| Steuereinheit | 5 |
| Bediengerät | 6 |
| Kommunikationsmittel | 7 |
| Sensoren | 8,8' |
| Grundplatte | 9 |
| Eingabemittel | 10 |
| Aufnahme | 11 |
| Elektrische Leitung | 12 |
| Stromquelle | 13 |
| Speichermedium | 14 |
| Befestigungsmittel | 15 |
| Schalter | 16 |

## Patentansprüche

1. Beleuchtungseinheit (1) zur Innen- und/oder Aussenbeleuchtung, welche eine Mehrzahl von Leuchtmodulen (2) umfasst, wobei jedes Leuchtmodul (2)
- eine Lichtquelle (3) und
- eine Steuereinheit (5) mit einem Steuerprogramm (6) zum Betrieb der Beleuchtungseinheit (1) und einem Speichermedium (14) umfasst, und
die Steuereinheit (5) in das ihr zugeordnete Leuchtmodul (2) integriert ist, **dadurch gekennzeichnet, dass** auf dem Speichermedium (14) jedes Leuchtmoduls (2) der Beleuchtungseinheit ein identischer Satz Voreinstellungen zum Betrieb der Beleuchtungseinheit (1) mit der Steuereinheit (5) abrufbar gespeichert ist, und die Leuchtmodule (2) zum Datenaustausch untereinander über Kommunikationsmittel (7) miteinander verbunden sind, wobei mehrere Leuchtmodule (2) eine Adressierung umfassen und jedes Leuchtmodul (2) in einer oder in mehreren Gruppen organisiert ist.

2. Beleuchtungseinheit (1) nach Anspruch 1, **dadurch gekennzeichnet, dass** jedes Leuchtmodul (2) den identischen Satz Voreinstellungen umfasst.

3. Beleuchtungseinheit (1) nach Anspruch 1 oder 2, **dadurch gekennzeichnet, dass** der Satz Voreinstellungen Unterregister mit Voreinstellungen umfasst, wobei die Voreinstellungen von jedem Unterregister für verschiedene Betriebsarten ausgelegt sind.

4. Beleuchtungseinheit (1) nach einem der vorhergehenden Ansprüche, **dadurch gekennzeichnet, dass** jedes Leuchtmodul (2) einen Lichtsensor (8) umfasst.

5. Beleuchtungseinheit (1) nach einem der vorhergehenden Ansprüche, **dadurch gekennzeichnet, dass** eine Eingabe und/oder eine Änderung an dem Steuerprogramm (6) eines Leuchtmoduls (2) oder eine Information eines Lichtsensors (8) eines Leuchtmoduls (2) unmittelbar an die Steuerprogramme (6) der übrigen Leuchtmodule (2) übertragbar ist, so dass jedes Leuchtmodul (2) der Beleuchtungseinheit (1) über das eigene Steuerprogramm (6) oder das Steuerprogramm (6) eines beliebigen anderen Leuchtmoduls der Beleuchtungseinheit (1) steuerbar ist.

6. Beleuchtungseinheit (1) nach einem der vorhergehenden Ansprüche, **dadurch gekennzeichnet, dass** die Kommunikationsmittel (7) zum Datenaustausch zwischen den Steuerprogrammen (6) der Leuchtmodule (2) als drahtlose Kommunikationsverbindungen oder als kabelgebundene Kommunikationsverbindungen ausgebildet sind.

7. Beleuchtungseinheit (1) nach einem der vorhergehenden Ansprüche, **dadurch gekennzeichnet, dass** ein Leuchtmodul (2) einen Sensor (8') umfasst, welcher zum Erfassen von bewegten Wärmequellen, vorzugsweise als ein Passiv-Infrarotsensor, ausgebildet ist.

8. Beleuchtungseinheit (1) nach einem der vorhergehenden Ansprüche, **dadurch gekennzeichnet, dass** jedes Leuchtmodul (2) ein Lampengehäuse (4) umfasst, wobei jedes Lampengehäuse (4) die Lichtquelle (3) und die Steuereinheit (5) des ihr zugeordneten Leuchtmoduls (2) umschliesst.

9. Beleuchtungseinheit (1) nach einem der vorhergehenden Ansprüche, **dadurch gekennzeichnet, dass** jedes Leuchtmodul zudem ein eigenes, ihr zugeordnetes Bediengerät (10) umfasst, mit welchem Einstellungen an der entsprechenden Steuereinheit (5) des zugeordneten Leuchtmoduls (2) eingebbar sind, und welches vorzugsweise ebenfalls vom Lampengehäuse (4) des entsprechenden Leuchtmoduls (2) umschlossenen ist.

10. Beleuchtungseinheit (1) nach einem der vorhergehenden Ansprüche, **dadurch gekennzeichnet, dass** diese zumindest eine Grundplatte (9) umfasst, wobei die Leuchtmodule (2) jeweils an einer eigenen und/oder an einer oder mehreren gemeinsamen Grundplatte (9) befestigbar sind.

11. Beleuchtungseinheit (1) nach einem der vorhergehenden Ansprüche, **dadurch gekennzeichnet, dass** jede Steuereinheit (6) der Leuchtmodule (2) zum Steuern zumindest einer Funktion, welche ausgewählt ist aus
- Ein- und Ausschalten der Lichtquelle (3),
- Dimmen der Lichtquelle (3),
- Einstellen einer Leuchtintensität der Lichtquelle (3)
- Einstellen eines Lichtschwellenwertes des Lichtsensors (8), und
- Einstellen einer Vor- oder Nachlaufzeit der Lichtquelle (3) bei einer definierten Leuchtintensität
ausgebebildet ist.

12. Beleuchtungseinheit (1) nach einem der vorhergehenden Ansprüche, **dadurch gekennzeichnet, dass** jedes Leuchtmodul (2) eine Adressierung umfasst, wobei Leuchtmodule (2) mit gleicher Adresse eine Gruppe bilden, in welcher jedes Leuchtmodul (2) gleichartig steuerbar ist.

13. Beleuchtungseinheit (1) nach einem der vorhergehenden Ansprüche, **dadurch gekennzeichnet, dass** die Lichtquelle (3) jedes Leuchtmoduls (2) eine oder mehrere light emitting electrode (LED) aufweist.

14. Verfahren zum Steuern einer Beleuchtungseinheit (1) nach einem der Ansprüche 1 bis 13, welches die folgenden Schritte umfasst:
- Bereitstellen einer Beleuchtungseinheit (1) gemäss einem der Ansprüche 1 bis 13,
**dadurch gekennzeichnet, dass** die Steuereinheiten (5) der Leuchtmodule (2) mit Kommunikationsmitteln (7) zum Datenaustausch miteinander verbunden werden und, dass zum Betrieb der Beleuchtungseinheit (1) für jedes Leuchtmodul (2) ein identischer Satz Voreinstellungen aus seinem integrierten Speichermedium (14) abgerufen, in das eigene Steuerprogramm (6) geladen und durch die ihr zugeordnete, integrierte Steuereinheit (5) ausgeführt wird.

15. Verfahren nach Anspruch 14, **dadurch gekennzeichnet, dass** jedes aus den Voreinstellungen Unterregister ausgewählt werden, welche für verschiedene Betriebsarten ausgelegt sind, und welche zumindest eine Funktion, welche ausgewählt ist aus
- Ein- und Ausschalten der Lichtquelle (3),
- Dimmen der Lichtquelle (3),
- Einstellen einer Leuchtintensität der Lichtquelle (3),
- Einstellen eines Lichtschwellenwertes des
- Lichtsensors (8), und
- Einstellen einer Vor- oder Nachlaufzeit der Lichtquelle (3) bei einer definierten Leuchtintensität
steuern.

16. Verfahren nach Anspruch 14 oder 15, **dadurch gekennzeichnet, dass** eine Eingabe an ein Steuerprogramm (6) eines beliebigen Leuchtmoduls (2) unmittelbar an die Steuereinheiten (5) der übrigen Leuchtmodule (2) übertragen und entsprechend der jeweiligen geladenen Voreinstellungen in jedem verbundenen Leuchtmodul (2) ausgeführt wird.

17. Verfahren nach Anspruch 14 bis 16, **dadurch gekennzeichnet, dass** zumindest eine Gruppe von Leuchtmodulen (2) durch Versehen dieser Leuchtmodule (2) mit einer gleichen Adressierung gebildet wird, so dass jede Lichtquelle (3) einer Gruppe von Leuchtmodulen (2) durch Eingabe eines Befehls an die Steuereinheit (6) eines beliebigen Leuchtmoduls (2) dieser Gruppe gesteuert wird.

## Claims

1. A lighting unit (1) for indoor and/or outdoor lighting, which comprises a plurality of lamp modules (2), each lamp module (2) comprising
- a light source (3) and
- a control unit (5) with a control program (6) for operating the lighting unit (1) and a storage medium (14), and
the control unit (5) being integrated into the lamp module (2) assigned to it, **characterized in that** an identical set of presets for operating the lighting unit (1) using the control unit (5) are stored on the storage medium (14) of each lamp module (2) of the lighting unit such that the set can be retrieved, and the lamp modules (2) are connected to one another via communication means (7) for data exchange with one another, wherein a plurality of lamp modules (2) comprise addressing and each lamp module (2) is organized in one or in a plurality of groups.

2. The lighting unit (1) according to Claim 1, **characterized in that** each lamp module (2) comprises the identical set of presets.

3. The lighting unit (1) according to Claim 1 or 2, **characterized in that** the set of presets comprises subregisters with presets, wherein the presets of each subregister are designed for various modes of operation.

4. The lighting unit (1) according to one of the preceding claims, **characterized in that** each lamp module (2) comprises a light sensor (8).

5. The lighting unit (1) according to one of the preceding claims, **characterized in that** an input and/or a change at the control program (6) of a lamp module (2) or information of a light sensor (8) of a lamp module (2) can be transmitted directly to the control programs (6) of the remaining lamp modules (2), so that each lamp module (2) of the lighting unit (1) can be controlled by means of its own control program (6) or the control program (6) of any desired other lamp module of the lighting unit (1).

6. The lighting unit (1) according to one of the preceding claims, **characterized in that** the communication means (7) are constructed as wireless communication connections or as wired communication connections for data exchange between the control programs (6) of the lamp modules (2).

7. The lighting unit (1) according to one of the preceding claims, **characterized in that** a lamp module (2) comprises a sensor (8'), which is designed for detecting moved heat sources, preferably as a passive infrared sensor.

8. The lighting unit (1) according to one of the preceding claims, **characterized in that** each lamp module (2) comprises a lamp housing (4), wherein each lamp housing (4) encloses the light source (3) and the control unit (5) of the lamp module (2) assigned to it.

9. The lighting unit (1) according to one of the preceding claims, **characterized in that** each lamp module additionally comprises an own operating device (10), which is assigned to it, using which settings can be input at the corresponding control unit (5) of the assigned lamp module (2), and which is preferably likewise enclosed by the lamp housing (4) of the corresponding lamp module (2).

10. The lighting unit (1) according to one of the preceding claims, **characterized in that** the same comprises at least one base plate (9), wherein the lamp modules (2) can respectively be fastened on an own and/or on one or more common base plates (9).

11. The lighting unit (1) according to one of the preceding claims, **characterized in that** each control unit (6) of the lamp modules (2) is designed for controlling at least one function, which is selected from
- switching the light source (3) on and off,
- dimming the light source (3),
- setting a light intensity of the light source (3),
- setting a threshold light value of the light sensor (8), and
- setting a starting or stopping time of the light source (3) at a defined light intensity.

12. The lighting unit (1) according to one of the preceding claims, **characterized in that** each lamp module (2) comprises addressing, wherein lamp modules (2) with the same address form a group, in which each lamp module (2) can be controlled in the same way.

13. The lighting unit (1) according to one of the preceding claims, **characterized in that** the light source (3) of each lamp module (2) has one or more light emitting electrodes (LEDs).

14. A method for controlling a lighting unit (1) according to one of Claims 1 to 13, which comprises the following steps:
- providing a lighting unit (1) according to one of Claims 1 to 13,
**characterized in that** the control units (5) of the lamp modules (2) are connected to communication means (7) for data exchange with one another and, **in that**, for operating the lighting unit (1) for each lamp module (2), an identical set of presets can be retrieved from its integrated storage medium (14), into which own control programs (6) are loaded and are executed by the integrated control unit (5) assigned to the same.

15. The method according to Claim 14, **characterized in that** each subregister from which presets are selected, which are designed for various modes of operation, and which control at least one function, which is selected from
- switching the light source (3) on and off,
- dimming the light source (3),
- setting a light intensity of the light source (3),
- setting a threshold light value of the
- light sensor (8), and
- setting a starting or stopping time of the light source (3) at a defined light intensity.

16. The method according to Claim 14 or 15, **characterized in that** an input to a control program (6) of any desired lamp module (2) is transmitted directly to the control units (5) of the remaining lamp modules (2) and is executed in each connected lamp module (2) according to the respective loaded presets.

17. The method according to Claims 14 to 16, **characterized in that** at least one group of lamp modules (2) is formed by providing these lamp modules (2) with identical addressing, so that each light source (3) of a group of lamp modules (2) is controlled by inputting a command into the control unit (6) of any desired lamp module (2) of this group.

## Revendications

1. Ensemble d'éclairage (1) pour éclairage intérieur et/ou extérieur, lequel comprend une pluralité de modules d'éclairage (2), sachant que chaque module d'éclairage (2) comprend :
- une source de lumière (3) et
- une unité de commande (5) avec un programme de commande (6) pour le fonctionnement de l'ensemble d'éclairage (1) et un moyen de mémorisation (14), et
- l'unité de commande (5) est intégrée dans le module d'éclairage (2) qui lui est attribué, **caractérisé en ce que** sur le moyen de mémorisation (14) de chaque module d'éclairage (2) de l'ensemble d'éclairage, est mémorisé un jeu identique de préréglages pour le fonctionnement de l'ensemble d'éclairage (1) pouvant être appelé avec l'unité de commande (5) et les modules d'éclairage (2) sont reliés entre eux pour l'échange de données entre eux par des moyens de communication (7), sachant que plusieurs modules d'éclairage (2) comprennent un adressage et chaque module d'éclairage (2) est organisé en un ou plusieurs groupes.

2. Ensemble d'éclairage (1) selon la revendication 1, **caractérisé en ce que** chaque module d'éclairage (2) comprend le jeu identique de préréglages.

3. Ensemble d'éclairage (1) selon la revendication 1 ou 2, **caractérisé en ce que** le jeu de préréglages comprend des sous-registres avec des préréglages, sachant que les préréglages de chaque sous-registre sont conçus pour différents types de fonctionnement.

4. Ensemble d'éclairage (1) selon l'une quelconque des revendications précédentes, **caractérisé en ce que** chaque module d'éclairage (2) comprend un capteur de lumière (8).

5. Ensemble d'éclairage (1) selon l'une quelconque des revendications précédentes, **caractérisé en ce qu'**une introduction et/ou une modification sur le programme de commande (6) d'un module d'éclairage (2) ou une information d'un capteur de lumière (8) d'un module d'éclairage (2) peut être transmise directement aux programmes de commande (6) des autres modules d'éclairage (2) de telle manière que chaque module d'éclairage (2) de l'ensemble d'éclairage (1) peut être commandé par le programme de commande propre (6) ou le programme de commande (6) de n'importe quel autre module d'éclairage de l'ensemble d'éclairage (1).

6. Ensemble d'éclairage (1) selon l'une quelconque des revendications précédentes, **caractérisé en ce que** les moyens de communication (7) pour l'échange de données entre les programmes de commande (6) des modules d'éclairage (2) sont constitués comme des liaisons de communication sans fil ou comme des liaisons de communication reliées par câbles.

7. Ensemble d'éclairage (1) selon l'une quelconque des revendications précédentes, **caractérisé en ce qu'**un module d'éclairage (2) comprend un capteur (8'), lequel est constitué pour la saisie des sources de chaleur déplacées, de préférence sous la forme d'un capteur à infrarouge passif.

8. Ensemble d'éclairage (1) selon l'une quelconque des revendications précédentes, **caractérisé en ce que** chaque module d'éclairage (2) comprend un boîtier de lampe (4), sachant que chaque boîtier de lampe (4) entoure la source de lumière (3) et l'unité de commande (5) du module d'éclairage (2) qui lui est attribué.

9. Ensemble d'éclairage (1) selon l'une quelconque des revendications précédentes, **caractérisé en ce que** chaque module d'éclairage (2) comprend en outre un appareil de commande propre qui lui est attribué (10) avec lequel il est possible d'introduire des réglages sur l'unité de commande (5) correspondante du module d'éclairage (2) attribué et lequel est entouré de préférence également par le boîtier de lampe (4) du module d'éclairage correspondant (2).

10. Ensemble d'éclairage (1) selon l'une quelconque des revendications précédentes, **caractérisé en ce que** celui-ci comprend au moins une plaque de base (9), sachant que les modules d'éclairage (2) peuvent être respectivement fixés à une plaque de base propre et/ou à une ou plusieurs plaques de base (9) communes.

11. Ensemble d'éclairage (1) selon l'une quelconque des revendications précédentes, **caractérisé en ce que** chaque unité de commande (6) des modules d'éclairage (2) est constituée pour commander au moins une fonction, laquelle est choisie à partir des suivantes
- mise en marche et arrêt de la source de lumière (3),
- modulation de la source de lumière (3),
- réglage d'une intensité d'éclairage de la source de lumière (3),
- réglage d'une valeur seuil de lumière du capteur de lumière (8), et
- réglage d'une durée de fonctionnement préalable ou ultérieure de la source de lumière (3) pour une intensité d'éclairage définie.

12. Ensemble d'éclairage (1) selon l'une quelconque des revendications précédentes, **caractérisé en ce que** chaque module d'éclairage (2) comprend un adressage, sachant que les modules d'éclairage (2) forment avec la même adresse un groupe dans lequel chaque module d'éclairage (2) peut être commandé de la même manière.

13. Ensemble d'éclairage (1) selon l'une quelconque des revendications précédentes, **caractérisé en ce que** la source de lumière (3) de chaque module d'éclairage (2) comporte une ou plusieurs diodes électroluminescentes (DEL).

14. Procédé de commande d'un ensemble d'éclairage (1) selon l'une quelconque des revendications 1 à 13, lequel comprend les étapes suivantes :
- préparation d'un ensemble d'éclairage (1) selon l'une quelconque des revendications 1 à 13,
**caractérisé en ce que** les unités de commande (5) des modules d'éclairage (2) sont reliées entre elles avec des moyens de communication (7) pour l'échange de données et **en ce qu'**un jeu identique de préréglages pour le fonctionnement de l'ensemble d'éclairage (1) pour chaque module d'éclairage (2) est appelé à partir de son moyen de mémorisation intégré (14) dans lequel un programme de commande propre (6) est chargé et exécuté par son unité de commande (5)intégrée qui lui est attribuée.

15. Procédé selon la revendication 14, **caractérisé en ce que** chacun des sous-registres est choisi à partir des préréglages, lesquels sont conçus pour différents types de fonctionnement et lesquels commandent au moins une fonction, laquelle est choisie à partir des suivantes
- mise en marche et arrêt de la source de lumière (3),
- modulation de la source de lumière (3),
- réglage d'une intensité d'éclairage de la source de lumière (3),
- réglage d'une valeur seuil de lumière
- du capteur de lumière (8), et
- réglage d'une durée de fonctionnement préalable ou ultérieure de la source de lumière (3) pour une intensité d'éclairage définie.

16. Procédé selon la revendication 14 ou 15, **caractérisé en ce qu'**une introduction sur un programme de commande (6) de n'importe quel module d'éclairage (2) est directement transmise aux unités de commande (5) des autres modules d'éclairage (2) et est exécutée conformément aux préréglages chargés respectifs dans chaque module d'éclairage (2) relié.

17. Procédé selon les revendications 14 à 16, **caractérisé en ce qu'**au moins un groupe de modules d'éclairage (2) est formé en dotant ces modules d'éclairage (2) d'un même adressage de telle manière que chaque source de lumière (3) d'un groupe de modules d'éclairage (2) est commandée par introduction d'un ordre sur l'unité de commande (6) de n'importe quel module d'éclairage (2) de ce groupe.
